# EUROPEAN PATENT APPLICATION

(11) **EP 3 188 302 A1**
(43) Date of publication of application: **05.07.2017**
(21) Application number: 14900818.7
(22) Date of filing: 27.08.2014
(51) Int. Cl.: H01M 10/0569

(54) **FLUORINE-SUBSTITUTED PROPYLENE CARBONATE-BASED ELECTROLYTE AND LITHIUM-ION BATTERY**

(71) Applicant: HSC Corporation, Zhangjiagang, Jiangsu 215635 (CN)
(72) Inventor: ZHENG, Honghe, Zhangjiagang Jiangsu 215635 (CN); YUN, Jiaojiao, Zhangjiagang Jiangsu 215635 (CN); ZHANG, Xianlin, Zhangjiagang Jiangsu 215635 (CN); SHEN, Ming, Zhangjiagang Jiangsu 215635 (CN); SHEN, Jinliang, Zhangjiagang Jiangsu 215635 (CN)
(74) Representative: Trillat, Anne-Cecile
(86) International application number: PCT/CN2014/085275
(87) International publication number: WO 2016/029379

(57) **Abstract**

The disclosure relates to a fluorine-substituted propylene carbonate-based electrolytic solution and a lithium-ion battery, particularly to a fluorine-substituted propylene carbonate-based electrolytic solution comprising fluorine-substituted propylene carbonate as a primary solvent and a co-solvent, wherein the fluorine-substituted propylene carbonate comprises 50-80 vol.%, and the co-solvent comprises 20-50 vol.%, based on the volume of the electrolytic solution for a lithium-ion battery. The advantages of the disclosure include: the electrolytic solution has a liquid range of over 300°C, resistance to high voltage, and low flammability; the fluorine-substituted propylene carbonate shows excellent film-forming effect on the surfaces of the positive and negative electrodes of the battery, thereby increasing the compatibility between the electrolytic solution and the positive and negative electrodes of the battery; the lithium-ion battery manufactured using this electrolytic solution has good safety, a broad operating temperature range, a high operating voltage and superior recyclability, and thus a promising prospect is expected for use in development of highly safe lithium-ion batteries having high specific energy and a wide temperature range for power supply and energy storage.

## Description

### Technical Field

The disclosure relates to an electrolytic solution having a wide liquid range for a lithium-ion battery, particularly to a fluorine-substituted propylene carbonate-based electrolytic solution and a lithium-ion battery comprising the electrolytic solution.

### Background Art

Energy resource is a fundamental resource which is very important for sustainable development of human society. Accelerating development of the global economy will inevitably lead to exhaustion of petroleum resource and exasperation of environmental pollution and global warming. This makes it necessary for human beings to balance the relationship between the "three Es": Economic Growth, Environmental Protection and Energy Security. In such an international background, it's imperative to develop new energy systems, new energy technologies, and related key materials featuring high energy density.

In recent two decades or more, metal lithium based batteries dominate the development of electrochemistry and chemical energy resource for the reason that, among all the negative electrode materials for batteries, metal lithium has the lowest mass density and the highest energy density. The research on the related novel high specific energy battery materials and electrochemical systems attracts great attention around the world.

As a result of the development of over 20 years, lithium-ion batteries have seen a great success in 3C (computer, communication and consumer electronics) markets, and become an important choice in the fields of power supply and energy storage nowadays. They have a significant sense for developing "low carbon economy" and executing the "12th Five-year" new energy strategy. However, these batteries encounter a giant challenge when used in the fields of power supply and energy storage, wherein the most critical problems are the low and high temperature properties, safety and lifetime of the batteries. Safety is the life of batteries. When used in a large scale, the battery system must not flame or explode under various harsh conditions such as high temperature, collision, penetration, etc. Meanwhile, the batteries must operate steadily at extreme temperatures. All these properties are related closely to electrolytic solution properties.

For batteries, the selection of an electrolytic solution not only has an intimate relationship with the voltage, specific capacity, specific power and the like of a battery, but determines the safety, use, storage lifetime and the like of the battery. An electrolytic solution of a lithium-ion battery is a liquid system mainly consisting of an organic solvent and an inorganic or organic lithium salt. Generally, it also comprises an amount of additives. As a main part of the electrolytic solution, the solvent is related directly to the battery safety: the flammability and inflammability of the solvent are responsible for burning and explosion of a battery in most cases such as overcharging, shorting, collision, high temperature, etc. In addition, the stability of the solvent against oxidation and reduction decides the operating voltage of the battery, and also affects the long-term cycling performance of the battery. Therefore, selection of a solvent component having high safety and a wide liquid range is decisive for development of high performance lithium-ion batteries for power supply and energy storage.

A fluorinated solvent is less flammable, and thus it's very desirable for development of an electrolytic solution having high safety. When H atom in a carbonate or ether solvent is substituted by F, some major physical properties will change, mainly including:
- Rise in flash point: as the substitution of fluorine reduces the hydrogen content of the solvent molecule, the flammability of the solvent is decreased. Studies show that the solvent is non-flammable if F/H>4 in the molecule.
- Decline in melting point: This facilitates improving the low temperature properties of a lithium-ion battery.
- Rise in chemical and electrochemical stability: This facilitates improving the long-term cycling performance of a battery.
- Good deactivation of electrode surface: The battery swelling problem is inhibited obviously.

Of course, if the solvent is excessively fluorinated or the fluorinated solvent is used in an excessive amount, the interface resistance of the electrode will be increased, and thus the rate capability and the like of the battery will be affected. In recent years, the use of fluorine-substituted ethylene carbonate (FEC) for improving the cycling performance of a battery has produced positive results. 1,1,2,2-tetrafluoro-2-(1,1,2,2-tetrafluoroethoxyl)-ethane (HCF₂CF₂OCF₂CF₂H, D2 for short) is launched by Hitachi Co., wherein the anti-oxidation potential of this solvent is 7.29 V, which is advantageous for development of high voltage electrolytic solutions. As an electrolytic solution additive, fluorine-substituted propylene carbonate (TFPC) facilitates formation of an SEI film on a graphite electrode surface that inhibits intercalation of solvated molecules into the interstice between graphite layers. As can thus be seen, most of the prior art fluorine-substituted organic solvents are used as electrolytic solution additives of lithium-ion batteries to improve some properties of the batteries. For example, US Patent No. 6010806 discloses a technology for improving the cycling performance of an electrode by mixing TFPC with a linear carbonate DMC and the like. However, the mixing with the linear carbonate cannot expand the liquid state temperature range of the electrolytic solution obviously. Due to the high flammability of the linear carbonate, this mixed system still has a high potential safety risk.

The present disclosure differs from the prior art (including the existing patent technologies) in the following two aspects:
First, according to the disclosure, a safer cyclic carbonate such as ethylene carbonate (EC), fluorinated ethylene carbonate (F-EC), difluorinated ethylene carbonate (DFEC), propylene carbonate (PC) or γ-butyrolactone is used as a co-solvent to achieve such features of an electrolytic solution system as high safety, a wide liquid range, high voltage resistance and the like, which is very important for development of future lithium-ion batteries having a high voltage and a high specific energy.
Second, according to the disclosure, the interaction between the solute and the solvent in an electrolytic solution is improved by adjusting the concentration of the lithium salt electrolyte, so as to realize good compatibility between the electrolytic solution and the electrode material.

The prior art has never disclosed an electrolytic solution in which fluorine-substituted propylene carbonate (TFPC) is used as a primary solvent in the above two ways.

In the current application fields of lithium-ion batteries, those skilled in the art have discovered that there is still an urgent need in the art for a new electrolytic solution for a lithium-ion battery, wherein the electrolytic solution exhibits a wide liquid range, extremely low flammability, better chemical and electrochemical stability, higher safety, better long-term cycling performance and extended service life. This is particularly significant for development of high performance batteries for power supply and energy storage, and a clear market prospect can be expected.

### Summary

As a result of a long-term study, the inventors have discovered that a lithium-ion battery electrolytic solution having a liquid range of more than 300°C and extremely low flammability can be obtained by using fluorine-substituted propylene carbonate (TFPC) as a primary solvent together with a small amount of an organic solvent having a low melting point, a high boiling point and high safety as a co-solvent or an additive, and selecting a suitable type of a lithium salt electrolyte at a suitable concentration. In addition, this electrolytic solution is resistant to a high voltage up to nearly 6 V. It's particularly significant for development of high performance batteries for power supply and energy storage, and a clear market prospect can be expected.

In one aspect, the disclosure provides a fluorine-substituted propylene carbonate-based electrolytic solution for a lithium-ion battery, wherein the electrolytic solution for a lithium-ion battery comprises fluorine-substituted propylene carbonate as a primary solvent and a co-solvent; wherein the fluorine-substituted propylene carbonate comprises 50-80 vol.%, and the co-solvent comprises 20-50 vol.%, based on the volume of the electrolytic solution for a lithium-ion battery.

In an embodiment of the disclosure, preferably, the fluorine-substituted propylene carbonate comprises 70-80 vol.%, and the co-solvent comprises 20-30vol.%.

In an embodiment of the disclosure, the co-solvent is selected from the group consisting of ethylene carbonate (EC) and derivatives thereof, propylene carbonate (PC) and derivatives thereof, methyl acetate (MA) and derivatives thereof. In specific embodiments, the co-solvent is one or more selected from the group consisting of ethylene carbonate (EC), fluorinated ethylene carbonate (F-EC), difluorinated ethylene carbonate (DFEC), propylene carbonate (PC), γ-butyrolactone, and methyl acetate (MA).

In an embodiment of the disclosure, the electrolytic solution for a lithium-ion battery further comprises an additive selected from one or more of vinylene carbonate (VC), vinylethylene carbonate, 1, 3-propane sultone, and 1, 4-butane sultone.

In a preferred embodiment of the disclosure, the amount of the additive comprises 1-5% of the total weight of the primary solvent and the co-solvent.

In an embodiment of the disclosure, the electrolytic solution for a lithium-ion battery comprises a lithium salt electrolyte as a solute selected from one or more of lithium hexafluorophosphate (LiPF₆), lithium tetrafluoroborate (LiBF₄), lithium bis(oxalato)borate (LiBOB), lithium difluoro(oxalato)borate (LiDOFB), lithium bis(trifluoromethanesulfonyl)imide (LiTFSI) and lithium bis(fluorosulfonyl)imide (LiFSI).

In a preferred embodiment of the disclosure, the lithium salt electrolyte has a content of 0.5 mol/L - 2.0 mol/L.

In another aspect, the disclosure provides a method of preparing the fluorine-substituted propylene carbonate-based electrolytic solution for a lithium-ion battery, comprising:
(1) mixing 50-80 vol.% of fluorine-substituted propylene carbonate as a primary solvent and 20-50 vol.% of a co-solvent in an inert gas protective atmosphere to form a mixed solvent;
(2) optionally, adding an additive to the mixed solvent, followed by mixing homogeneously;
(3) dissolving a lithium salt electrolyte, followed by stirring fully and homogeneously; and
(4) packaging the fluorine-substituted propylene carbonate-based electrolytic solution for a lithium-ion battery in an inert gas protective atmosphere for storage.

In an embodiment of the disclosure, the fluorine-substituted propylene carbonate has a purity of 99.9% or more.

In an embodiment of the disclosure, the co-solvent is one or more selected from the group consisting of ethylene carbonate (EC), fluorinated ethylene carbonate (F-EC), difluorinated ethylene carbonate (DFEC), propylene carbonate (PC), γ-butyrolactone, and methyl acetate (MA).

In an embodiment of the disclosure, the additive is one or more selected from the group consisting of vinylene carbonate (VC), vinylethylene carbonate, 1, 3-propane sultone, and 1, 4-butane sultone; preferably, the additive is added in an amount of 1-5% of the total weight of the primary solvent and the co-solvent.

In an embodiment of the disclosure, the lithium salt electrolyte present as a solute in the electrolytic solution for a lithium-ion battery is one or more selected from the group consisting of LiPF₆, LiBF₄, LiBOB, LiDOFB, LiTFSI and LiFSI; preferably, the lithium salt electrolyte has a content of 0.5 mol/L - 2.0 mol/L.

In still another aspect, the disclosure provides a lithium-ion battery comprising the fluorine-substituted propylene carbonate-based electrolytic solution for a lithium-ion battery.

In the disclosure, the inert gas protective atmosphere is selected from argon gas or nitrogen gas.

Finally, the fluorine-substituted propylene carbonate-based electrolytic solution for a lithium-ion battery according to the disclosure has the following technical advantages:
(1) its solidifying point can be -60°C or less;
(2) its boiling point can be 250°C or more;
(3) the liquid state temperature range (i.e. liquid range) exceeds 300°C; and
(4) it's almost nonflammable, and thus it's highly safe.

Specifically, the above objects of the disclosure are fulfilled by providing a fluorine-substituted propylene carbonate-based electrolytic solution having a wide liquid range and a lithium-ion battery. A method of preparing the fluorine-substituted propylene carbonate-based electrolytic solution having a wide liquid range comprises the following steps:
(1) mixing 50-80 vol.% of fluorine-substituted propylene carbonate and 20-50 vol.% of a co-solvent under the protection of high purity argon to form a mixed solvent;
(2) adding an effective amount of an additive to the mixed solvent, followed by mixing homogeneously;
(3) dissolving a lithium salt electrolyte, followed by stirring fully and homogeneously; and
(4) packaging in an inert atmosphere for storage.

In the disclosure, the fluorine-substituted propylene carbonate has a purity of 99.9% or more as desired.

The co-solvent is selected from one of ethylene carbonate (EC), fluorinated ethylene carbonate (F-EC), difluorinated ethylene carbonate (DFEC), propylene carbonate (PC), γ-butyrolactone and methyl acetate (MA), or a mixture of any two or more of them.

The additive is added in an amount of 1-5% of the total weight of the mixed solvent.

The additive is one of vinylene carbonate (VC), vinylethylene carbonate, 1, 3-propane sultone, and 1, 4-butane sultone, or a combination of any two or more of them.

The lithium salt electrolyte is selected from one of LiPF₆, LiBF₄, LiBOB, LiDOFB, LiTFSI and LiFSI, or a combination of any two or more of them; and the lithium salt electrolyte has a content of 0.5 mol/L - 2.0 mol/L.

Preferably, the lithium salt electrolyte is lithium hexafluorophosphate (LiPF₆), lithium bis(trifluoromethanesulfonyl)imide (LiTFSI) or lithium tetrafluoroborate (LiBF₄).

In a preferred embodiment of the disclosure, the fluorine-substituted propylene carbonate electrolytic solution is comprised of fluorine-substituted propylene carbonate as a primary solvent and a co-solvent, wherein the co-solvent is selected from one of ethylene carbonate (EC) and derivatives thereof, propylene carbonate (PC) and derivatives thereof, methyl acetate (MA) and derivatives thereof, or a mixture of any two or more of them.

In a more preferred embodiment of the disclosure, the fluorine-substituted propylene carbonate electrolytic solution is comprised of fluorine-substituted propylene carbonate as a primary solvent, a co-solvent and an effective amount of an additive, wherein the co-solvent is selected from one of ethylene carbonate (EC) and derivatives thereof, propylene carbonate (PC) and derivatives thereof, methyl acetate (MA) and derivatives thereof, or a mixture of any two or more of them; and the additive is selected from one of vinylene carbonate (VC), vinylethylene carbonate, 1, 3-propane sultone, and 1, 4-butane sultone, or a combination of any two or more of them.

In all the embodiments of the disclosure, the fluorine-substituted propylene carbonate electrolytic solution is free of a highly flammable component commonly used in the prior art, for example, diethyl carbonate (DEC), dimethyl carbonate (DMC) or ethyl methyl carbonate (EMC).

In another aspect, the disclosure provides a lithium-ion battery comprising the fluorine-substituted propylene carbonate-based electrolytic solution for a lithium-ion battery, wherein the lithium-ion battery comprises a positive electrode material selected from one of LiNi_{0.8}Co_{0.15}Al_{0.05}O₂(NCA), LiNiₓCo_{y}Mn_{z}O₂ (wherein x+y+z=1), LiNi_{0.5}Mn_{1.5}O₄, LiMn₂O₄ or LiCoO₂. In a preferred embodiment, the lithium-ion battery comprises a negative electrode material selected from graphite negative electrode materials or silicon based negative electrode materials. In a more preferred embodiment, the lithium-ion battery comprises a lithium salt electrolyte selected from one of LiPF₆, LiBF₄, LiBOB, LiDOFB, LiTFSI and LiFSI, or a combination of any two or more of them; preferably lithium hexafluorophosphate (LiPF₆), lithium bis(trifluoromethanesulfonyl)imide (LiTFSI) or lithium tetrafluoroborate (LiBF₄); wherein the lithium salt electrolyte has a content of 0.5 mol/L - 2.0 mol/L.

The present disclosure differs from the prior art (including the existing patent technologies) in the following two aspects:
First, according to the disclosure, a safer cyclic carbonate such as ethylene carbonate (EC), fluorinated ethylene carbonate (F-EC), difluorinated ethylene carbonate (DFEC), propylene carbonate (PC) or γ-butyrolactone is used as a co-solvent to achieve such features of an electrolyte system as high safety, wide liquid range, high voltage resistance and the like, which is very important for development of future lithium-ion batteries having a high voltage and a high specific energy.
Second, according to the disclosure, the interaction between the solute and the solvent in an electrolyte is improved by adjusting the concentration of the lithium salt electrolyte, so as to realize good compatibility between the electrolyte and the electrode material.

As compared with the prior art, the preparation method according to the disclosure can provide a highly safe lithium-ion battery electrolytic solution having a wide liquid range, wherein the electrolytic solution has a solidifying point of -60°C or less, a boiling point of 250°C or more, a liquid state temperature range (i.e. liquid range) of greater than 300°C, and it is almost nonflammable.

It's more noteworthy that the gassing phenomenon associated with LiNi_{0.8}Co_{0.15}Al_{0.05}O₂ (NCA) as a positive electrode material in this highly stable electrolytic solution in a long-term cycle is well inhibited, and the side reaction between the electrolytic solution and the electrode material is reduced significantly. In the prior art, these are important technical hurdles that have to be faced by the development of long life lithium-ion batteries. As confirmed by the disclosure, these technical hurdles can be removed by use of the fluorine-substituted propylene carbonate-based electrolytic solution system according to the disclosure. Therefore, this system is of great significance for development of future lithium-ion batteries having a high specific energy and a long lifetime.

### Brief Description of the Drawings

The disclosure will be further illustrated in detail with reference to the following accompanying drawings and specific embodiments.

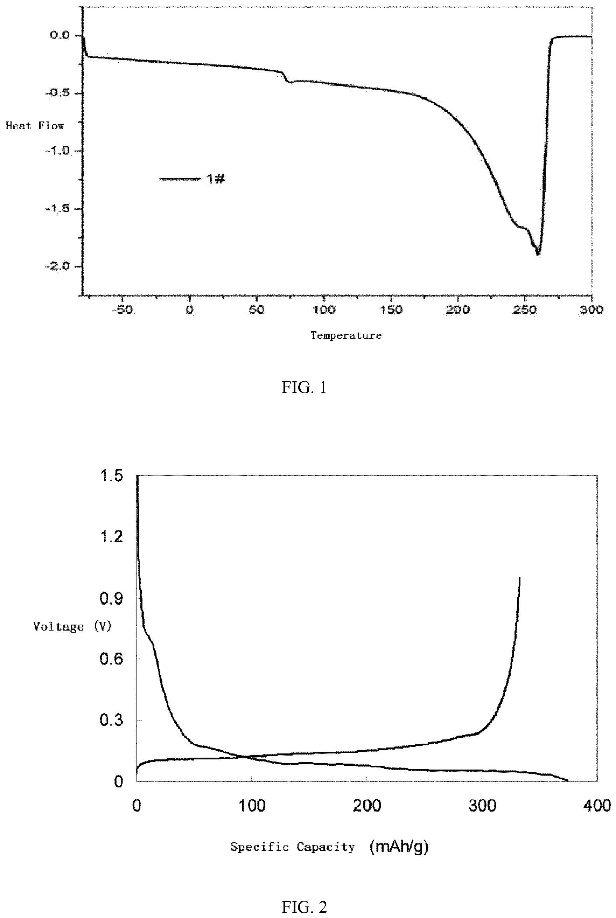

Fig. 1 is a differential scanning calorimetry (DSC) curve of a fluorine-substituted propylene carbonate-based electrolytic solution for a lithium-ion battery in Example 1 according to the disclosure.
Fig. 2 is an initial charge-discharge curve of a natural graphite negative electrode in the electrolytic solution of Example (1) according to the disclosure.

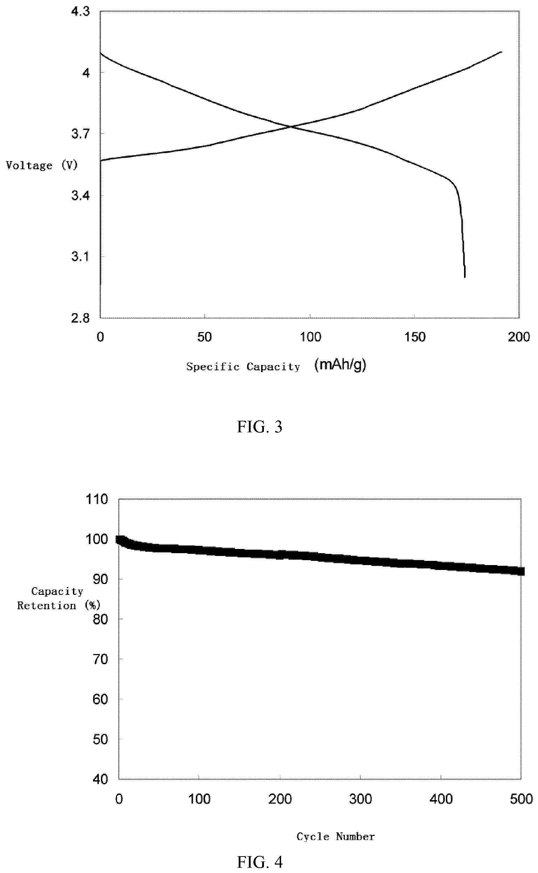

Fig. 3 is an initial charge-discharge curve of LiNi_{0.8}Co_{0.15}Al_{0.05}O₂ (NCA) positive electrode material in a fluorine-substituted propylene carbonate-based electrolytic solution for a lithium-ion battery in an embodiment according to the disclosure.
Fig. 4 shows the long-term cycling performance of a lithium-ion battery on the whole using the electrolytic solution of Example (1) according to the disclosure.

### Detailed Description

The disclosure will be further demonstrated with reference to the following examples. It is to be noted that the following examples are only intended to illustrate the disclosure in an exemplary way, not to limit the protection scope of the disclosure.

### Example 1: TFPC/(EC+PC) composite electrolytic solution system

50 ml high purity, anhydrous fluorine-substituted propylene carbonate was added to 30 ml PC and 10 ml EC, and mixed homogeneously. 23.1g LiPF₆ was dissolved as a supporting electrolyte. After stirring homogeneously under the protection of high purity argon, a 1.5M LiPF₆/ TFPC/PC/EC (5:3:1) electrolytic solution system was obtained, and the system was packaged in an argon atmosphere for storage.

### Example 2: TFPC/(C1-EC+PC) composite electrolytic solution system

50 ml high purity, anhydrous fluorine-substituted propylene carbonate was added to 20ml PC and 10 ml Cl-EC (chlorine-substituted ethylene carbonate), and mixed homogeneously. 14.5g LiPF₆ was dissolved as a supporting electrolyte. After stirring homogeneously under the protection of high purity argon, a 1.2M LiPF₆/ TFPC/Cl-EC/PC (5:2:1) electrolytic solution system was obtained, and the system was packaged in an argon atmosphere for storage.

### Example 3: TFPC/(EC+PC) composite electrolytic solution system

50 ml high purity, anhydrous fluorine-substituted propylene carbonate was added to 30 ml PC and 20ml EC, and mixed homogeneously. 15.4g LiPF₆ and 1.43g LiDFOB were dissolved as a supporting electrolyte. After stirring homogeneously under the protection of high purity argon, a 1.0M LiPF₆+0.1M LiDFOB/TFPC/PC/EC (5:3:2) electrolytic solution system was obtained, and the system was packaged in an argon atmosphere for storage.

### Example 4: TFPC/(FEC+PC) composite electrolytic solution system

50 ml high purity, anhydrous fluorine-substituted propylene carbonate was added to 30ml PC and 10 ml fluorine-substituted ethylene carbonate (FEC), and mixed homogeneously. 13.9g LiPF₆ was dissolved as a supporting electrolyte. After stirring homogeneously under the protection of high purity argon, a 1.0M LiPF₆/ TFPC/PC/FEC (5:3:1) electrolytic solution system was obtained, and the system was packaged in an argon atmosphere for storage.

### Example 5: TFPC/(EC+MFA) composite electrolytic solution system

50 ml high purity, anhydrous fluorine-substituted propylene carbonate was added to 30 ml EC and 10 ml methyl acetate (MA), and mixed homogeneously. 13.9g LiPF₆ was dissolved as a supporting electrolyte. After stirring homogeneously under the protection of high purity argon, a 1.0M LiPF₆/ TFPC/EC/MFA (5:3:1) electrolytic solution system was obtained, and the system was packaged in an argon atmosphere for storage.

### Example 6: TFPC/(EC+PC) - additive composite electrolytic solution system

50 ml high purity, anhydrous fluorine-substituted propylene carbonate was added to 30 ml PC and 20ml EC, and mixed homogeneously. 5ml vinylene carbonate (VC) was added, and 15.4g LiPF₆ was dissolved as a supporting electrolyte. After stirring homogeneously under the protection of high purity argon, a 1.0M LiPF₆/ TFPC/PC/EC (5:3:2) electrolytic solution system comprising 5% VC as an additive was obtained, and the system was packaged in an argon atmosphere for storage.

As tested, all the composite electrolytic solution systems of Examples 1-6 as described above have a boiling point of about 250°C, or even greater than 260°C, which is about 160°C higher than the boiling point of a traditional 1.0M LiPF₆/ EC+DEC (1:1) electrolytic solution system; and a freezing point which is about 40°C lower than the traditional electrolytic solution. As can be seen, the liquid state temperature range of this kind of electrolytic solution systems is very broad, thereby expanding the operating temperature range of a battery to a large extent.

In addition, this kind of fluorine-substituted propylene carbonate electrolytic solution systems are free of highly flammable components such as DEC, DMC, EMC or the like, and have a high flash point, a high fluorine content, and a low hydrogen content, so that the electrolytic solutions are less flammable. Hence, the safety of the electrolytic solutions is enhanced greatly. Due to the absence of linear carbonate components which are prone to oxidation, the electrolytic solutions have good anti-oxidation stability. This kind of electrolytic solutions are suitable for use as high voltage lithium-ion battery systems. Owing to the good stability of the electrolytic solutions, they are very important for development of lithium-ion batteries having high safety and specific energy.

At the same time, this kind of fluorine-substituted propylene carbonate electrolytic solution systems based on fluorine-substituted organic solvents show superior film-forming behavior. They are not only suitable for lithium-ion batteries comprising graphite based carbon negative electrode systems, but they also exhibit good effect for lithium-ion batteries comprising silicon negative electrodes.

Additionally, this kind of fluorine-substituted propylene carbonate electrolytic solution systems can be used repeatedly because they are less volatile, less toxic in use, and easily recyclable.

Therefore, this kind of fluorine-substituted propylene carbonate electrolytic solution systems according to the disclosure are new, safe and green electrolytic solution systems.

The method of preparing the lithium-ion batteries according to the disclosure will be demonstrated with reference to the following specific Examples.

### Example 7:

### 1. Preparation of a LiNi_{0.8}Co_{0.15}Al_{0.05}O₂ (NCA) positive electrode sheet

6g of a polyvinyl difluoride (PVDF) binder and 5g of conductive carbon black were mixed into 89g of N-methyl pyrrolidone (NMP), and mixed homogeneously by stirring at a speed of 4000 rounds/minute. The resulting mixture was further mixed with 100g of a LiNi_{0.8}Co_{0.15}Al_{0.05}O₂(NCA) positive electrode material to prepare a slurry, and then stirred at a speed of 4000 rounds/minute for 2 hours to ensure fully homogeneous mixing of the slurry. Thereafter, the slurry was coated on an aluminum foil current collector in a dry environment, wherein the electrode coating had a dry thickness of 70 microns. The coating was pressed under 2 atms for subsequent use.

### 2. Preparation of a graphite negative electrode sheet

5g of a PVDF binder and 2g of an acetylene black conductive agent were mixed into 43g of an NMP organic solvent, and mixed homogeneously by stirring at a speed of 4000 rounds/minute. The resulting mixture was further mixed with 100g of a natural graphite anode electrode material to prepare a slurry, and then stirred at a speed of 4000 rounds/minute for 2 hours to ensure fully homogeneous mixing of the slurry. The slurry was coated on a copper foil current collector in a dry environment, wherein the electrode coating had a dry thickness of about 50 microns. The coating was pressed under 2 atms for subsequent use.

### 3. Preparation of a button battery

In a glove box, a button battery was assembled using the above LiNi_{0.8}Co_{0.15}Al_{0.05}O₂(NCA) positive electrode sheet and the graphite negative electrode sheet respectively as working electrodes, a metal lithium sheet as a counter electrode, a Celgard 2400 separator (available from Celgard Co. in USA), and the electrolytic solution for a lithium-ion battery prepared in Example 1. Following the common process for manufacturing a button battery, after cutting, drying, assembly, solution injection and sealing by pressing, the resulting battery was subjected to formation.

### 4. Formation and testing of the battery

The formation system for the battery was as follows: the battery was charged and discharged three times at a constant current having a current density of 0.1 mA/cm². The LiNi_{0.8}Co_{0.15}Al_{0.05}O₂ (NCA) electrode sheet had a charge cutoff voltage of 4.1V, and a discharge cutoff voltage of 3.0V. The natural graphite electrode sheet had a charge cutoff voltage of 0 V, and a discharge cutoff voltage of 2.0V. After the formation, a current density of 0.2 mA/cm² was used to test the cycling performance of the battery.

The electrolytic solution system manufactured according to the disclosure not only exhibits good compatibility with positive and negative electrode materials of a lithium-ion battery, but also features a broad range of operating temperature and safety. Therefore, it is expected to be used in lithium-ion batteries having high safety and long lifetime.

The above description only sets out some preferred examples of the disclosure. All equivalent variations and modifications made in the scope of the claims of the disclosure fall in the scope defined by the claims of the disclosure.

## Claims

1. A fluorine-substituted propylene carbonate-based electrolytic solution for a lithium-ion battery, wherein the electrolytic solution for a lithium-ion battery comprises fluorine-substituted propylene carbonate as a primary solvent and a co-solvent, wherein the fluorine-substituted propylene carbonate comprises 50-80 vol.%, and the co-solvent comprises 20-50 vol.%, based on the volume of the electrolytic solution for a lithium-ion battery.

2. The fluorine-substituted propylene carbonate-based electrolytic solution for a lithium-ion battery according to claim 1, wherein the co-solvent is selected from one or more of ethylene carbonate (EC), fluorinated ethylene carbonate (F-EC), difluorinated ethylene carbonate (DFEC), propylene carbonate (PC), γ-butyrolactone, and methyl acetate (MA).

3. The fluorine-substituted propylene carbonate-based electrolytic solution for a lithium-ion battery according to claim 1 or 2, wherein the electrolytic solution for a lithium-ion battery further comprises an additive selected from one or more of vinylene carbonate (VC), vinylethylene carbonate, 1, 3-propane sultone, and 1, 4-butane sultone; preferably, the additive is added in an amount of 1-5% of the total weight of the primary solvent and the co-solvent.

4. The fluorine-substituted propylene carbonate-based electrolytic solution for a lithium-ion battery according to claim 1 or 2, wherein the electrolytic solution for a lithium-ion battery comprises a lithium salt electrolyte as a solute selected from one or more of LiPF₆, LiBF₄, LiBOB, LiDOFB, LiTFSI and LiFSI; preferably, the lithium salt electrolyte has a content of 0.5 mol/L - 2.0 mol/L.

5. A method of preparing the fluorine-substituted propylene carbonate-based electrolytic solution for a lithium-ion battery according to any one of claims 1-4, comprising:
(1) mixing 50-80 vol.% of fluorine-substituted propylene carbonate as a primary solvent and 20-50 vol.% of a co-solvent in an inert gas protective atmosphere to form a mixed solvent;
(2) optionally, adding an additive to the mixed solvent, followed by mixing homogeneously;
(3) dissolving a lithium salt electrolyte, followed by stirring fully and homogeneously;
(4) packaging the fluorine-substituted propylene carbonate-based electrolytic solution for a lithium-ion battery in an inert gas protective atmosphere for storage.

6. The method of preparing the fluorine-substituted propylene carbonate-based electrolytic solution for a lithium-ion battery according to claim 5, wherein the fluorine-substituted propylene carbonate has a purity of 99.9% or more.

7. The method of preparing the fluorine-substituted propylene carbonate-based electrolytic solution for a lithium-ion battery according to claim 5, wherein the co-solvent is selected from one or more of ethylene carbonate (EC), fluorinated ethylene carbonate (F-EC), difluorinated ethylene carbonate (DFEC), propylene carbonate (PC), γ-butyrolactone, and methyl acetate (MA).

8. The method of preparing the fluorine-substituted propylene carbonate-based electrolytic solution for a lithium-ion battery according to claim 5, wherein the additive is selected from one or more of vinylene carbonate (VC), vinylethylene carbonate, 1, 3-propane sultone, and 1, 4-butane sultone; preferably, the additive is added in an amount of 1-5% of the total weight of the primary solvent and the co-solvent.

9. The method of preparing the fluorine-substituted propylene carbonate-based electrolytic solution for a lithium-ion battery according to claim 5, wherein the lithium salt electrolyte in the electrolytic solution for a lithium-ion battery is selected from one or more of lithium hexafluorophosphate (LiPF₆), lithium tetrafluoroborate (LiBF₄), lithium bis(oxalato)borate (LiBOB), lithium difluoro(oxalato)borate (LiDOFB), lithium bis(trifluoromethanesulfonyl)imide (LiTFSI) and lithium bis(fluorosulfonyl)imide (LiFSI); preferably, the lithium salt electrolyte has a content of 0.5 mol/L - 2.0 mol/L.

10. A lithium-ion battery comprising the fluorine-substituted propylene carbonate-based electrolytic solution for a lithium-ion battery according to any one of claims 1-4.
